# EUROPEAN PATENT SPECIFICATION

(11) **EP 2 839 736 B1**
(45) Date of publication and mention of the grant of the patent: **12.10.2016**
(21) Application number: 14397524.1
(22) Date of filing: 20.08.2014
(51) Int. Cl.: A01K 1/01

(54) **Manure removing apparatus for a freestall cattle barn**
Vorrichtung zur Beseitigung von Tierdung für einen Viehlaufstall
Appareil d'élimination de fumier bovin pour une étable à stabulation libre

(30) Priority: 21.08.2013 FI 20135851
(43) Date of publication of application: 25.02.2015
(73) Proprietor: Pellon Group Oy, 62375 Ylihärmä (FI)
(72) Inventor: Ikola, Kaappo, 62375 Ylihärmä (FI); Ylimäki, Juha, 62375 Ylihärmä (FI)
(74) Representative: LEITZINGER OY

(56) References cited:
- EP-A1- 1 557 082
- FR-A1- 2 403 958
- US-A1- 2010 137 772

## Description

The invention relates to a manure removing apparatus for a freestall cattle barn, comprising a manure alley, a scraper to be pulled along the manure alley, which gathers manure in front of itself for conveying the manure into a removing channel, a traction cable attached to the scraper, a traction mechanism for pulling the traction cable and the scraper, a control device for controlling operation of the traction mechanism, as well as means for measuring the pulling force of the traction cable and for stopping operation of the traction mechanism once the pulling force exceeds a threshold value set in the control device and based on a rate of change or sudden increase in the pulling force of the scraper, and/or the threshold value is adapted to automatically increase as a function of the scraper's travelling distance as the scraper proceeds from an outer end of the manure alley towards the removing channel.

In prior known manure removing systems of this type, a tensile load measuring spring has been adjusted to stop the traction mechanism and the movement of a scraper at a given pulling force (e.g. 200 kg). This prior known system arrangement nevertheless involves substantial safety problems. At an upstream end (outer end) of the manure alley, the manure load is still quite modest and hence the load safety limit is excessively high. However, the safety limit cannot be lowered sufficiently, because the manure load accumulated at a downstream end of the manure alley may cause an unwanted stop of the traction. In addition, the specific weight and amount of manure may vary, depending on feeding. Normally, healthy bovine animals step over a slowly moving scraper with no problems. However, the cases of animals getting sick or calving on the manure alley (as the animals have a freedom of movement in a freestall barn) may result in major hazards in connection with prior known manure removing equipment.

Publication US 2010/137772 discloses a traction apparatus which impresses a desired traction force to a body to be pulled. Between the body to be pulled and a take up drum there is a traction rope having its rope load impressed via a pulley and a coupling plate to a load sensor having a load cell to a surface of a load sensor plate. The direction of the traction rope changes 90 degrees over the pulley which increases the rope load that acts on the load sensor plate. The traction apparatus is used as a medical treatment device to hoist the neck and waste of a human body.

Publication EP 1 557 082 discloses a manure removing apparatus of the aforesaid type with an objective to observe loading deviations in an effort to achieve a safe removal of the accumulating manure load. Both ends of the manure alley are fitted with motor-driven reels for a traction cable whose loading is monitored with a measuring device based on the torque of the motors. When the turns of cable are wound on top of each other, the reel grows in diameter and the torque increases. As a result, the pulling force measuring accuracy is undermined. The masses of rotating reels and motors result in inertial forces which affect measurement sensitivity and thereby also measuring accuracy.

It is an objective of the invention to solve the above-mentioned problem with a manure removing apparatus, which enables a measurement of the loading deviations in a sufficiently sensitive and accurate manner.

This objective is attained on the basis of the characterizing features presented in the appended claim 1 of the invention. Preferred embodiments of the invention are presented in the dependent claims.

A weighing sensor used in the invention measures directly the traction cable's pulling force, the weighing sensor hence responding precisely and quickly to loading variations of the traction cable.

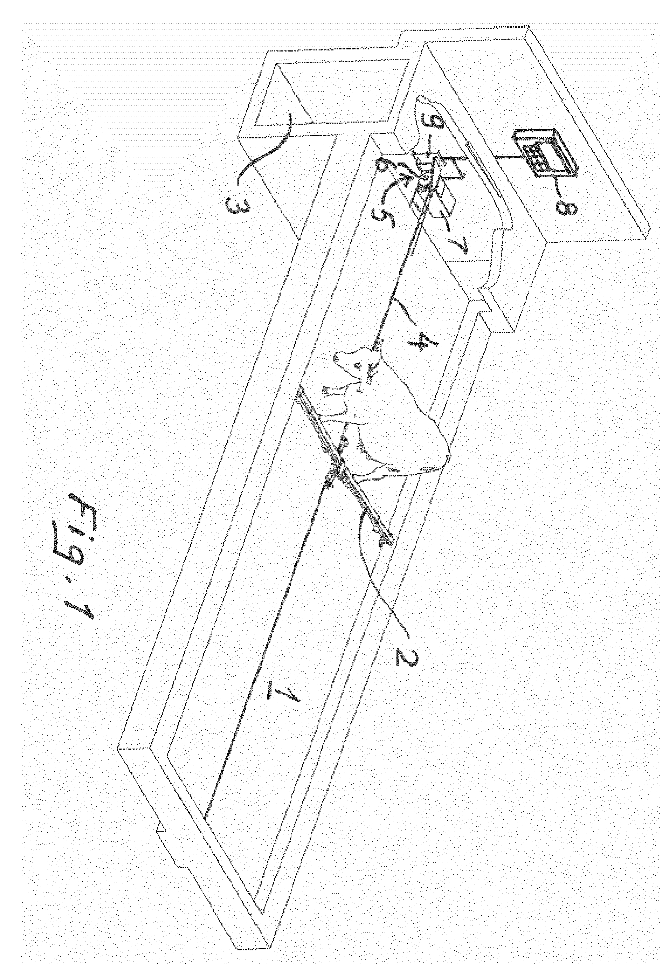

The invention will now be described more closely with reference to the accompanying drawing, in which fig. 1 shows a manure removing apparatus of the invention in a perspective view obliquely from above.

The manure removing apparatus comprises a scraper 2 to be pulled along a manure alley 1, which gathers manure in front of itself for conveying the manure into a removing channel 3. To the scraper 2 is attached a traction cable 4, which has its upper run in the manure alley 1 along its entire length and its lower run in a urine draining channel present underneath the manure alley 1. The traction cable 4 extends over a friction wheel 6 included in a traction mechanism 5. The friction wheel 6 is driven by a motor 7 with its gearing. The manure alley has at its upstream end (outer end) a freely rotating idler wheel around which extends the traction cable 4. In manure removing operation, the cable 4 and the scraper 2 are pulled by the traction mechanism 5 from the outer end of the manure alley 1 towards the removing channel 3. This pulling motion occurs at such a slow rate that the movement of the scraper 2 does not disturb healthy animals who step over the scraper 2 while moving about. Likewise, the scraper performs its return motion slowly enough from the standpoint of safety.

A control device 8 is provided on a wall of the freestall cattle barn and it is used for controlling operation of the traction mechanism 5. The control device 8 includes a display and keyboard, as well as control electronics which may include a program-controlled processor along with its memory.

The traction mechanism 5 is fastened to an end wall or some other backing structure with a weighting sensor 9, said weighting sensor measuring continuously the pulling force of the scraper 2 throughout the entire pulling cycle. The weighting sensor 9 supplies the control device 8 with measurement data about the pulling force across the entire travelling distance of the scraper 2.

The weighting sensor is a strain gauge transducer which measures tensile or compression force. Other types of force sensors can also be contemplated.

The control device 8 is adapted to respond to a change of rate in the pulling force of the scraper 2. Normally, the pulling force increases at a relatively consistent rate and sudden changes in the pulling force are quite modest. On this basis, the control device has been provided with a set threshold value for the rate of change in the pulling force. In this context, the change of rate refers to a change timed over a period with the duration (e.g. less than 1 second) suitable from the standpoint of operation. In other words, the threshold value for a rate of change is exceeded if the pulling force increases more than anticipated within a given period of time. If, for example, a passage of the scraper is blocked by the foot of a cow, the scraper may stop and the pulling force increases abruptly. Once the threshold value is exceeded, the pull of the scraper is halted and an alarm is given. The scraper can also be moved slightly backward, followed by another attempt to proceed. If the threshold value is exceeded again, it is only then that the pull of the scraper is stopped and an alarm given. The threshold value can be determined and set experimentally. The threshold value for a rate of change in the pulling force is more or less independent of the absolute pulling force value, thus obtaining a high responsiveness without false alarms. This embodiment is easy to implement.

As an alternative, the control device 8 can have its microprocessor provided with a program under whose control the control device 8 is adapted, on the basis of measurement results from the weighting sensor, to automatically learn and set a changing threshold value for the pulling force which enables a safe removal of the accumulating manure load. Hence, in this alternative embodiment, the pulling motion-stopping threshold value is adapted to automatically increase within certain limits as a function of the traveling distance of the scraper 2 while a manure load is being conveyed by the scraper 2 from the outer end of the manure alley 1 towards the removing channel 3. In this case, as well, the stopping of the pulling motion only takes place when exceptional loading deviations are detected. It is allowable that the absolute magnitude of loading is small at the start of a pull, but the stoppage is caused by the increase of loading which is excessively rapid with respect to the pulling distance. At the end of a pulling motion, the loading is allowed to be quite high, i.e. such that the device, during its operation, has learned and stored in its memory as a safe traction load over the latter part of the travelling distance.

In the first use of both embodiments of the invention, the apparatus can be subjected to trial runs during which the apparatus is set up with (or the apparatus is taught) safe threshold values either for a rate of change in the pulling force or for the pulling force as a function of the scraper's travelling distance. As a result, the apparatus is capable of safely and positively removing manure loads generated in working conditions existing at any time.

## Claims

1. A manure removing apparatus for a freestall cattle barn, comprising a manure alley (1), a scraper (2) to be pulled along the manure alley, which gathers manure in front of itself for conveying the manure into a removing channel (3), a traction cable (4) attached to the scraper, a traction mechanism (5) for pulling the traction cable (4) and the scraper (2), a control device (8) for controlling operation of the traction mechanism (5), as well as means (9) for measuring the pulling force of the traction cable (4) and for stopping operation of the traction mechanism (5) once the pulling force exceeds a threshold value set in the control device and based on a rate of change or sudden increase in the pulling force of the scraper (2), and/or the threshold value is adapted to automatically increase as a function of the scraper's (2) travelling distance as the scraper proceeds from an outer end of the manure alley (1) towards the removing channel (3), **characterized in that** the traction mechanism (5) is fastened to a wall or some other backing structure through the intermediary of a weighing sensor (9), said weighing sensor being adapted to measure the pulling force throughout the entire pulling cycle and to supply the control device (8) with measurement data about the pulling force across the entire travelling distance of the scraper (2).

2. A manure removing apparatus according to claim 1, **characterized in that** to the scraper (2) is attached the traction cable (4) with its upper run in the manure alley and its lower run in a urine draining channel underneath the manure alley, that the traction cable (4) extends around a friction wheel (6) of the traction mechanism (5), and that the manure alley has at its other end a freely rotating idler wheel around which the traction cable (4) extends.

3. A manure removing apparatus according to claim 1 or 2, **characterized in that** the control device (8) has its microprocessor provided with a program under whose control the control device is adapted, on the basis of measurement results from the weighing sensor (9), to automatically learn and set a changing threshold value which enables a safe removal of the accumulating manure load.

4. A manure removing apparatus according to claim 1 or 2, **characterized in that** once the threshold value is exceeded, the traction mechanism is adapted to perform a reverse motion of the scraper (2) and a new pulling motion before possibly stopping operation of the traction mechanism (5).

## Patentansprüche

1. Dungbeseitigungsvorrichtung für einen Viehlaufstall, umfassend eine Dunggasse (1), einen die Dunggasse entlang zu ziehenden Räumer (2), der Dung vor sich selbst einsammelt, um den Dung in einen Abführkanal (3) zu befördern, ein Zugseil (4), das an dem Räumer befestigt ist, einen Zugmechanismus (5) zum Ziehen des Zugseils (4) und des Räumers (2), eine Steuerungsvorrichtung (8) zum Steuern des Betriebs des Zugmechanismus (5) sowie Mittel (9) zum Messen der Zugkraft des Zugseils (4) und zum Stoppen des Betriebs des Zugmechanismus (5), sobald die Zugkraft einen Schwellenwert überschreitet, der in der Steuerungsvorrichtung eingestellt ist und auf einer Änderungsrate oder einem plötzlichen Anstieg der Zugkraft des Räumers (2) basiert, und/oder wobei der Schwellenwert derart adaptiert ist, dass er in Abhängigkeit von dem Verfahrweg des Räumers (2) automatisch ansteigt, während sich der Räumer von einem äußeren Ende der Dunggasse (1) in Richtung des Abführkanals (3) vorbewegt, **dadurch gekennzeichnet, dass** der Zugmechanismus (5) unter Zwischenschaltung eines Wiegesensors (9) an einer Wand oder einer anderen Tragkonstruktion befestigt ist, wobei der Wiegesensor dazu ausgebildet ist, die Zugkraft während des gesamten Zugzyklus zu messen und die Steuerungsvorrichtung (8) mit Messdaten über die Zugkraft über die gesamte Verfahrstrecke des Räumers (2) zu versorgen.

2. Dungbeseitigungsvorrichtung nach Anspruch 1, **dadurch gekennzeichnet, dass** an dem Räumer (2) das Zugseil (4), mit seinem oberen Trum in der Dunggasse und seinem unteren Trum in einem Urinableitungskanal unterhalb der Dunggasse, befestigt ist, dass sich das Zugseil (4) um ein Reibrad (6) des Zugmechanismus (5) herum erstreckt und dass die Dunggasse an ihrem anderen Ende ein sich frei drehendes Mitlaufrad aufweist, um welches sich das Zugseil (4) herum erstreckt.

3. Dungbeseitigungsvorrichtung nach Anspruch 1 oder 2, **dadurch gekennzeichnet, dass** der Mikroprozessor der Steuerungsvorrichtung (8) mit einem Programm versehen ist, wobei die Steuerungsvorrichtung unter dessen Steuerung dazu ausgebildet ist, auf der Basis von Messergebnissen von dem Wiegesensor (9) einen sich ändernden Schwellenwert automatisch zu lernen und einzustellen, der ein sicheres Beseitigen der sich ansammelnden Dunglast ermöglicht.

4. Dungbeseitigungsvorrichtung nach Anspruch 1 oder 2, **dadurch gekennzeichnet, dass**, sobald der Schwellenwert überschritten wird, der Zugmechanismus dazu ausgebildet ist, eine Rückwärtsbewegung des Räumers (2) und eine neue Ziehbewegung durchzuführen, ehe eventuell der Betrieb des Zugmechanismus (5) gestoppt wird.

## Revendications

1. Appareil pour éliminer le fumier pour une étable à loges, comprenant une allée de fumier (1), un racleur (2) qui doit être tiré le long de l' allée de fumier, qui collecte le fumier en avant de lui-même pour transmettre le fumier à l'intérieur d'un canal d'élimination (3), un câble de traction (4) attaché au racleur, un mécanisme de traction (5) pour tirer le câble de traction (4) et le racleur (2), un appareil de commande (8) pour commander le fonctionnement du mécanisme de traction (5), ainsi que des moyens (9) pour mesurer la force de traction du câble de traction (4) et pour stopper le fonctionnement du mécanisme de traction (5) une fois que la force de traction dépasse une valeur de seuil établie dans le dispositif de commande et basée sur un taux de change ou une augmentation soudaine de la force de traction du racleur (2), et/ou la valeur de seuil est adaptée pour augmenter automatiquement en tant que fonction de la distance de parcours du racleur (2) pendant que le racleur progresse à partir d'une extrémité extérieure de l'allée de fumier (1) vers le canal d'élimination (3), **caractérisé en ce que** le mécanisme de traction (5) est attaché à une paroi ou à quelque autre structure de support grâce à l'intermédiaire d'un capteur de pesage (9), ledit capteur de pesage étant adapté pour mesurer la force de traction à travers le cycle de traction entier et pour approvisionner le dispositif de commande (8) en données de mesure en ce qui concerne la force de traction à travers l'entière distance de parcours du racleur (2).

2. Appareil d'élimination de fumier bovin selon la revendication 1, **caractérisé en ce qu'**on attache le câble de traction (4) au racleur (2) avec son brin supérieur dans l'allée de fumier et son brin inférieur dans un canal de drainage en-dessous de l'allée de fumier, que le câble de traction (4) s'étend autour d'une roue de friction (6) du mécanisme de traction (5), et que l'allée de fumier possède à son autre extrémité une roue libre pivotant librement autour de laquelle s'étend le câble de traction (4).

3. Appareil d'élimination de fumier bovin selon la revendication 1 ou la revendication 2, **caractérisé en ce que** le dispositif de contrôle (8) voit son microprocesseur installé avec un programme sous le contrôle duquel le dispositif de contrôle est adapté, sur la base de résultats de mesure depuis le détecteur de pesée (9), pour apprendre automatiquement et définir une valeur de seuil changeante qui permet une élimination sécurisée de la charge de fumier accumulé.

4. Appareil d'élimination de fumier bovin selon la revendication 1 ou la revendication 2, **caractérisé en ce qu'**une fois la valeur de seuil dépassée, le mécanisme de traction est adapté pour effectuer un déplacement inverse du racleur (2) et un nouveau déplacement de traction avant d'éventuellement arrêter le fonctionnement du mécanisme de traction (5).
